# EUROPÄISCHE PATENTANMELDUNG

(11) **EP 0 728 704 A2**
(43) Veröffentlichungstag der Anmeldung: **28.08.1996**
(21) Anmeldenummer: 96102030.2
(22) Anmeldetag: 13.02.1996
(51) Int. Cl.: C02F 1/46, B01D 53/32, B01D 53/50

(54) **Verfahren zur direkten elektrochemischen Oxidation von sulfithaltigen Lösungen, insbesondere Abwässern aus Gasreinigungsanlagen**

(30) Priorität: 23.02.1995 DE 19506242
(71) Anmelder: METALLGESELLSCHAFT AKTIENGESELLSCHAFT, D-60323 Frankfurt am Main (DE)
(72) Erfinder: Neumann, Ulrich, Dr., D-67663 Kaiserslautern (DE); Willing, Wolfgang, Dr., D-61206 Wöllstadt (DE)

(57) **Zusammenfassung**

Die sulfithaltige Lösung ist mit Schwefel-Sauerstoff-Säuren oder deren Natriumsalzen verunreinigt. Man leitet die Lösung als Anolyt durch den Anodenraum einer Elektrolyseanlage mit mindestens einer Zelle. Der Anodenraum ist durch eine Kationenaustauschermembran vom Kathodenraum getrennt. Mindestens ein Teil des aus der Zelle abgezogenen Anolyten mit einem pH-Wert von höchstens 5 führt man zu einem Reaktions- und Entgasungsgefäß, wobei man SO₂ gasförmig abzieht. Anolyt aus dem Reaktions- und Entgasungsgefäß wird in den Anodenraum zurückgeführt. Im Kathodenraum wird eine NaOH-Lösung gebildet.

## Beschreibung

Die Erfindung betrifft ein Verfahren zur elektrochemischen Behandlung einer sulfithaltigen Lösung, insbesondere einem Abwasser aus einer Gasreinigungsanlage, wobei die Lösung mit Schwefel-Sauerstoff-Säuren oder deren Natriumsalzen verunreinigt ist.

Bei der Entschwefelung von Rauchgasen oder Chemieabgasen werden unter anderem Verfahren auf Basis einer im Kreislauf geführten alkalischen, Natriumsulfit und/oder Natriumhydrogensulfit enthaltenden Waschlösung angewandt. Das Schwefeldioxid wird dabei aus den Abgasen absorbiert und nach Desorption gasförmig gewonnen. In nachgeschalteten Verfahrensstufen kann das SO₂ verflüssigt oder aber zu Elementarschwefel oder Schwefelsäure aufgearbeitet werden.

Ein geringer Anteil des Sulfits in der Waschlösung wird während der Entschwefelung durch den im Rauchgas enthaltenen Sauerstoff oxidiert. Das gebildete Natriumsulfat kann man aus einem Teilstrom der Kreislauflösung abtrennen und vorzugsweise zu verwertbarem Reinsulfat aufarbeiten. Die dadurch entstehenden Natrium-Verluste in der Waschlösung müssen durch Zusatz von Natronlauge ergänzt werden. Außerdem reichern sich in der Kreislauflösung Verunreinigungen aus den Rauchgasen, z.B. Verbindungen der Schwermetalle Eisen, Chrom, Nickel und Vanadium, sowie unterschiedliche andere Schwefel-Sauerstoff-Verbindungen wie Natriumdithionat, Natriumthiosulfat, Natriumpolythionate und stickstoffhaltige Schwefel-Sauerstoff-Verbindungen wie Natriumimidosulfat an. Aus diesem Grund ist es erforderlich, Teilströme von Prozeßlösungen, in denen diese Verbindungen konzentriert sind, aufzuarbeiten und zu entsorgen. Auch können bei der Aufarbeitung Abwässer anfallen, die ebenfalls mit den genannten Verbindungen sowie mit Natriumsulfit und/oder Natriumdisulfit verunreinigt sind. Die gleichermaßen umweltfreundliche wie auch kostengünstige Aufbereitung dieser Lösungen stellt ein durch den Stand der Technik noch nicht befriedigend gelöstes Problem dar. So ist z.B. bekannt, solche Lösungen aufzukonzentrieren und zu verbrennen. Diese Verfahrensweise ist aber mit erheblichen Kosten verbunden und bringt durch die starke Salzbelastung der Verbrennungsrückstände zusätzliche Probleme mit sich.

Beim eingangs genannten Verfahren ist deshalb die Aufgabe gestellt, die mit verschiedenen Schwefel-Sauerstoff-Verbindungen verunreinigten Lösungen und Abwässer ohne zusätzliche Chemikalienzufuhr umweltfreundlich und kostengünstig zu entsorgen. Erfindungsgemäß wird dies dadurch erreicht, daß man die Lösung als Anolyt durch den Anodenraum einer Elektrolyseanlage mit mindestens einer Zelle leitet, deren Anodenraum durch eine Kationenaustauschermembran vom Kathodenraum getrennt ist, wobei man mindestens einen Teil des aus der Zelle abgezogenen Anolyten mit einem pH-Wert von höchstens 5 im Kreislauf durch ein Reaktions- und Entgasungsgefäß führt und SO₂ gasförmig abzieht und wobei im Kathodenraum eine NaOH-Lösung gebildet wird. In der Praxis wird man in den meisten Fällen mit einer Elektrolyseanlage mit mehreren Zellen arbeiten, um einen hohen Durchsatz zu erreichen. Dies ist in der nachfolgenden Beschreibung berücksichtigt.

Vorteilhafterweise gibt man die zu behandelnde Lösung oder das Abwasser dem schwach schwefelsauren Anolyten zu, bevor dieser in das Reaktions- und Entgasungsgefäß geleitet wird. Die durch anodische Oxidation der Schwefel-Sauerstoff-Verbindungen in den Anodenkammern gebildete Schwefelsäure wird hierbei dazu benutzt, um aus dem zugeführten Sulfit und/oder Disulfit sowie aus anderen im sauren Medium leicht Schwefeldioxid abspaltenden Verbindungen, z.B. Dithionat, das SO₂ gasförmig freizusetzen. Auf diese Weise wird bereits im Reaktions- und Entgasungsgefäß ein großer Teil des in der Lösung gebundenen Schwefeldioxids ohne weitere Zugabe von Chemikalien freigesetzt. Gleichzeitig wird dabei der größte Teil der in den Anodenkammern gebildeten Schwefelsäure ohne Verbrauch von Chemikalien neutralisiert. Vorteilhaft ist, daß sich so beim erfindungsgemäßen Verfahren im Anolyt-Kreislauf nur ein geringer Schwefelsäuregehalt von 10 bis 60 g/l einstellt.

Die Kationenaustauschermembranen der Zellen sind für Natriumionen gut durchlässig, so daß die Stromausbeute bei der in den Kathodenkammern gebildeten Natronlauge zwischen 50 und 70 % liegt. Das stellt bei der hohen Ionenbeweglichkeit der ebenfalls durch die Membranen wandernden Wasserstoffionen ein sehr gutes Ergebnis dar. Die als Katholyt dienende NaOH-Lösung ist üblicherweise eine wäßrige Lösung mit einem NaOH-Gehalt von 10 bis 30 Gew.-%.

Elektrolysiert wird bei Stromdichten zwischen 0,5 und 10 kA/m² und Temperaturen zwischen 20 und 100°C, vorzugsweise bei 60 bis 90°C. Vorzugsweise ist die Elektrolyseanlage eine Mehrfachzellen-Anordnung mit bipolaren Elektroden. Für die Anoden eignet sich Platin oder auch Titan, Niob, Tantal oder Graphit. Die Anoden können zur Aktivierung mit Edelmetallen, Edelmetalloxiden, Mischoxiden von Platinmetallen und Metallen der IV. bis VI. Nebengruppe oder mit Bleidioxid beschichtet sein. Die Kathoden sind z.B. aus Eisen, Edelstahl oder Nickel hergestellt, sie können in bekannter Weise zur Senkung der Wasserstoffüberspannung oberflächlich aufgerauht oder auch in bekannter Weise aktiviert sein, z.B. durch Beschichtung mit Raney-Nickel.

Um den Gehalt an Schwefeldioxid in der im Kreislauf geführten Anolytlösung vor Eintritt in die Anodenräume möglichst gering zu halten, kann im Reaktions- und Entgasungsgefäß z.B. mit Luft, Wasserdampf oder einem Inertgas gestrippt werden. Auch senkt die Arbeitsweise bei der bevorzugten Temperatur von 60 bis 90°C den SO₂-Gehalt im Anolyten durch Verringerung der Löslichkeit des SO₂.

Für eine optimale Reaktionsführung ist es vorteilhaft, im Reaktions- und Entgasungsgefäß mit einer relativ hohen Verweilzeit von 15 bis 300 Minuten und vorzugsweise mindestens 60 Minuten zu arbeiten. Einerseits wird dadurch die Entgasung begünstigt, besonders auch zusammen mit der Anwendung eines gas- oder dampfförmigen Strippmediums. Andererseits erfordert die in saurer Lösung erfolgende Disproportionierung einiger der Schwefel-Sauerstoff-Säuren unter Bildung von SO₂ eine längere Reaktionszeit.

Auf jeden Fall wird bevorzugt unter solchen Elektrolyse- und Reaktionsbedingungen gearbeitet, bei denen ein möglichst großer Anteil des beim Ansäuern gebildeten Schwefeldioxids gasförmig ausgetrieben wird. Damit unterscheidet sich die erfindungsgemäße Verfahrensweise prinzipiell von dem in der DE-C-36 14 005 vorgeschlagenen Verfahren. Dieser Stand der Technik betrifft ein Rauchgasentschwefelungsverfahren, bei dem die gesamte, mittels Natronlauge als Sulfit aus dem Rauchgas absorbierte Schwefeldioxidmenge elektrolytisch zu Schwefelsäure oxidiert wird. Das bekannte Verfahren ist mit einer dem Anwendungsbeispiel zugrundegelegten Elektrolysestromstärke von nur 40 mA, wobei man bei einem erhöhten pH-Wert von über 8 arbeitet, weit von einer technischen Realisierbarkeit entfernt. Insbesondere treten beim bekannten Verfahren folgende Probleme auf:
1. Um die gesamte aus dem Rauchgas absorbierte Schwefeldioxidmenge zu Schwefelsäure zu oxidieren, müßte die Elektrolysekapazität und der Verbrauch an Elektrolysestrom um ein Vielfaches höher sein. Dies jedoch würde das Verfahren unwirtschaftlich machen. Im Gegensatz dazu wird beim erfindungsgemäßen Verfahren nur ein relativ kleiner Teil der aufzuarbeitenden Lösung elektrochemisch behandelt und es wird unter Bedingungen gearbeitet, bei denen ein möglichst großer Teil des SO₂ gasförmig und ohne Oxidation freigesetzt wird. Dies verringert die benötigte Elektrolysekapazität und man kommt üblicherweise mit weniger als 5 % des Elektrolysestroms aus, der zur elektrochemischen Oxidation des gesamten, aus dem Rauchgas entfernten SO₂ benötigt würde.
2. Beim bekannten Verfahren muß bei der angestrebten Umwandlung des gesamten, aus dem Rauchgas entfernten SO₂ in Schwefelsäure zwangsläufig mit einem stark schwefelsauren Anolyten gearbeitet werden. Damit geht aber der Anteil der Natriumionen am Stromtransport durch die Kationenaustauschermembranen zurück und entsprechend verringert sich die Ausbeute an wiedergewinnbarer Natronlauge. Es entsteht eine stark mit Natriumsulfat verunreinigte Schwefelsäure, die nicht oder kaum weiterverwendet werden kann. Im Gegensatz dazu wird beim erfindungsgemäßen Verfahren für eine hohe Ausbeute an Natronlauge gesorgt und gleichzeitig wird wenig Schwefelsäure gebildet. Bei der Entsorgung kann diese geringe Schwefelsäuremenge durch einen Teil der gebildeten Natronlauge neutralisiert werden und das entstehende Natriumsulfat kann man zu Reinsulfat aufarbeiten.
3. Das Problem der sich in der Anolyt-Kreislauflösung anreichernden Schwefel-Sauerstoff-Verbindungen, die nur durch geeignete Wahl der Elektrolysebedingungen elektrochemisch abgebaut werden können, wird im bekannten Verfahren der DE-C-36 14 005 nicht angesprochen.

Eine vorteilhafte Weiterbildung des erfindungsgemäßen Verfahrens besteht darin, auch den Katholyten im Kreislauf zwischen den Kathodenräumen und einem Abscheidegefäß zu führen. Hierbei läßt sich der kathodisch gebildete Wasserstoff aus dem Abscheidegefäß entfernen. In den Katholyt-Kreislauf wird vorzugsweise eine solche Menge an Wasser eindosiert, daß eine Natronlauge mit einem NaOH-Gehalt von 10 bis 30 Gew.-% entsteht.

Bei der Elektrolyseanordnung mit ihren durch Kationenaustauschermembranen geteilten Zellen erzeugen die in den Kathodenräumen gebildeten Gasblasen einen solchen Auftrieb der Flüssigkeit, daß eine Gaslift-Wirkung erreicht wird. Diese Gaslift-Wirkung (Mammut-Pumpen-Prinzip) ist stark genug, um den Katholyten im Kreislauf strömen zu lassen. Überraschend wurde gefunden, daß auch der Anolyt-Kreislauf ohne zusätzliche Umlaufpumpen aufrechterhalten werden kann, da es bereits in den Anodenräumen zu einer intensiven Entwicklung von gasförmigem SO₂ kommt. Auch durch dieses Gas wird ein starker Gaslift-Effekt erreicht.

Es kann sich empfehlen, die Elektrolyseanordnung zweistufig auszubilden und die erste Elektrolysestufe mit im Kreislauf zwischen den Anodenräumen und dem Reaktions- und Entgasungsgefäß geführtem Anolyten zu betreiben. Der zweiten Elektrolysestufe wird ein Teilstrom des aus dem Reaktions- und Entgasungsgefäß kommenden Anolyten zugeführt, um noch vorhandene Reste der oxidierbaren Schwefel-Sauerstoff-Verbindungen vollständig zu Sulfat zu oxidieren. Die zweite Elektrolysestufe kann somit auch als oxidative Nachbehandlungsstufe bezeichnet werden. Diese zweite Stufe kann ebenfalls eine durch eine Kationenaustauschermembran geteilte Elektrolysezelle oder auch mehrere solcher Zellen umfassen.

Für diese der Nachbehandlung dienende Zelle oder Zellen wird die Anode ebenfalls z.B. aus Platin gebildet, um ein hohes Oxidationspotential von mindestens 2 V zu erreichen. Die oxidative Nachbehandlung kann so durchgeführt werden, daß sich Peroxodisulfat und/oder andere zur Oxidation befähigte reaktive Spezies (z.B. OH-Radikale) bilden. In einem nachgeschalteten Reaktor kann man diese Spezies mit eventuell noch vorhandenen Resten an schwer oxidierbaren Schwefel-Sauerstoff-Verbindungen unter Bildung von Sulfationen zur Umsetzung bringen. Im allgemeinen ist diese Nachbehandlung außerhalb der Elektrolyseanordnung jedoch nicht erforderlich.

Wenn man mit einer mindestens zweistufigen Elektrolyseanordnung arbeitet, wendet man im allgemeinen in der ersten Stufe eine niedrigere Zellenspannung als in der zweiten Stufe oder den übrigen Stufen an. Es empfiehlt sich, den Anteil der Stromkapazität der zweiten (und folgenden) Elektrolysestufe zu minimieren. Vorzugsweise wird die erste Elektrolysestufe mit 70 bis 95 % der gesamten Stromkapazität aller Stufen betrieben. In der ersten Stufe kann mit kostengünstigerem Elektrodenmaterial, d.h. ohne Platin, gearbeitet werden. Eine besonders günstige apparative Ausgestaltung des Verfahrens ergibt sich dadurch, daß die Elektrolysestufen innerhalb einer bipolaren Mehrfachzelle angeordnet werden. Hier weist die gesamte Elektrolyseanlage nur zwei äußere Stromanschlüsse auf. Üblicherweise arbeitet man mit einer, zwei oder höchstens drei Elektrolysestufen.

Wenn man mit mehreren Elektrolysestufen arbeitet, kann es geschehen, daß der Anolyt, den man aus der Anodenkammer (oder -kammern) der letzten Stufe abzieht, relativ sauer ist und einen pH-Wert unter 2 aufweist. In diesem Fall kann es zweckmäßig sein, diesen abgezogenen Anolyten durch den Kathodenraum der letzten Elektrolysestufe zu leiten, wodurch der pH-Wert angehoben wird. Dabei kann man eine Kathode auf Graphitbasis verwenden, was relativ niedrige Zellenspannungen ermöglicht. Gleichzeitig wird so ein Überschuß an Peroxodisulfat im Anolyten abgebaut.

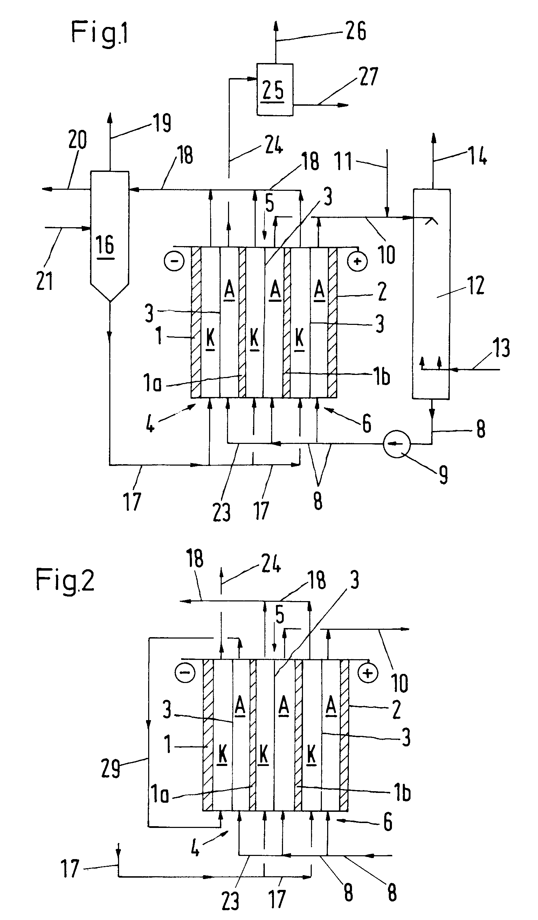

Die Zeichnung zeigt in Fig. 1 ein Fließschema mit einer Elektrolyseanordnung, die als bipolare Mehrfachzelle ausgestaltet ist. Fig. 2 zeigt eine Variante der Elektrolytführung.

Bei der Elektrolysesanordnung der Zeichnung sind zwischen der Endkathode (1) und der Endanode (2) drei Einzelzellen (4), (5) und (6) elektrisch in Serie geschaltet. Die Zellen sind durch die bipolaren Zwischenelektroden (1a) und (1b) getrennt. Jede Zelle weist einen Anodenraum (A) und einen Kathodenraum (K) auf. Zwischen jedem Anoden- und Kathodenraum befindet sich eine Kationenaustauschermembran (3).

Die Zellen (5) und (6) bilden die erste Stufe der Elektrolyseanordnung, in welcher der Anolyt im Kreislauf geführt wird. Zu diesem Kreislauf gehören die Zuleitung (8) mit der Umlaufpumpe (9), die Anolyt-Ableitung (10) mit der Einspeiseleitung (11) für die Zufuhr frischer, zu behandelnder Lösung, sowie das Reaktions- und Entgasungsgefäß (12). Dem unteren Bereich des Gefäßes (12) wird Strippgas, insbesondere Luft, durch die Leitung (13) zugeführt. Ein Gasgemisch, das ausgetriebenes SO₂ und Strippgas enthält, zieht man am Kopf des Gefäßes (12) durch die Leitung (14) ab. Im Anolyten der Leitung (8) hält man die Temperatur im Bereich von 20 bis 100°C und vorzugsweise bei mindestens 60°C, der pH-Wert beträgt höchstens 5 und vorzugsweise höchstens 4.

Durch die Kathodenräume (K) der Zellen (4), (5) und (6) leitet man eine wäßrige NaOH-Lösung, die aus dem Vorratsgefäß (16) kommt und in der Leitung (17) herangeführt wird. Abströmender Katholyt wird durch die Sammelleitung (18) in den Behälter (16) zurückgeführt, aus dem man freigesetzten Wasserstoff durch die Leitung (19) abführt. Man erhält überschüssige Natronlauge, die man in der Leitung (20) abzieht und weiterverwenden kann. Wasser wird durch die Leitung (21) zugeführt. Es wird dafür gesorgt, daß der NaOH-Gehalt in der Lösung der Leitung (17) 10 bis 30 Gew.-% beträgt. Die Gasbildung in den Kathodenräumen (K) sorgt durch den Gaslift-Effekt dafür, daß der Katholyt-Kreislauf ohne Umwälzpumpe arbeitet.

Die Elektrolysezelle (4) bildet die zweite Stufe der Elektrolyseanordnung, die der Nachoxidation dient. Zu diesem Zweck wird ein Teilstrom des Anolyten der Leitung (8) durch die Leitung (23) abgezweigt und dem Anodenraum (A) der Zelle (4) zugeführt. Der in der Leitung (24) abgezogene Anolyt, der nun praktisch frei von Sulfit ist, wird in einen Entgasungsbehälter (25) geleitet. Freigesetztes Gas zieht man in der Leitung (26) ab und entfernt entgaste Lösung, die sulfatreich ist, durch die Leitung (27).

Bei der Verfahrensvariante der Fig. 2 arbeitet man ebenso wie in Fig. 1 mit einer zweistufigen Elektrolyseanordnung. Gemäß Fig. 2 wird aber der stark saure Anolyt (pH kleiner 2) aus der Anodenkammer (A) der zweiten Stufe (Zelle 4) in der Leitung (29) abgezogen und direkt in den Kathodenraum (K) der zweiten Stufe geleitet. Dort wird der pH-Wert des Anolyten durch das vorhandene Natriumhydroxid erhöht, wobei im Anolyten vorhandenes Na-Peroxodisulfat (Na₂S₂O₈) mindestens teilweise umgesetzt wird. Den in der Leitung (24) abströmenden Katholyten führt man durch die Leitung (24) zum Entgasungsbehälter (25), wie das in Fig. 1 dargestellt ist. Im übrigen gelten zu Fig. 2, auch zur Ergänzung des Fließschemas, die zusammen mit Fig. 1 gegebenen Erläuterungen.

### Beispiel 1

Im Labormaßstab wird mit einer der Zeichnung entsprechenden Anordnung gearbeitet, wobei die bipolare Mehrfachzelle aber aus vier Einzelzellen besteht. Drei Einzelzellen bilden die erste Elektrolysestufe und die vierte Einzelzelle, zu der die Endkathode gehört, dient als zweite Elektrolysestufe. Die Elektroden bestehen aus Tantal mit Pt-Beschichtung, wobei die Anodenseite nur zu einem Drittel mit Platin belegt ist. In den Einzelzellen fließt ein Strom von 150 A bei Zellenspannungen in der ersten Stufe von 4,9 V und in der zweiten Stufe von 6,0 V. Die Stromdichten betragen anodisch 6 kA/m² und kathodisch 2 kA/m², die Temperaturen in den Zellen liegen bei etwa 65°C. In der Leitung (11) werden 5 l/h eines Abwassers (Mutterlauge) aus einer Rauchgasentschwefelung nach dem Wellmann-Lord-Verfahren herangeführt, welches folgende Schwefel-Sauerstoff-Verbindungen enthält:

| | |
|---|---|
| Natriumsulfit (Na₂SO₃) | 4,2 Gew.-% |
| Natriumdisulfit (Na₂S₂O₅) | 31,0 Gew.-% |
| Natriumsulfat (Na₂SO₄) | 3,6 Gew.-% |
| Natriumthiosulfat (Na₂S₂O₃) | 2,0 Gew.-% |
| Natriumdithionat (Na₂S₂O₆) | 3,1 Gew.-% |
| Natriumamidosulfat (NH₂SO₃Na) | 0,2 Gew.-% |
| Natriumimidosulfat NH(SO₃Na)₂ | 1,7 Gew.-% |

In der Leitung (8) stellt sich ein Überschuß an oxidierbaren Verbindungen von 53 g/l (gerechnet als Na₂SO₃) und ein H₂SO₄-Gehalt von 45 g/l ein. Ein Teilstrom von 3,6 l/h wird durch die Leitung (23) in die als zweite Elektrolysestufe dienende vierte Einzelzelle geführt, wobei man aus dieser zweiten Stufe durch die Leitung (24) eine Lösung abzieht, die 9 g/l an oxidierenden Substanzen (gerechnet als Na₂S₂O₈), 83 g/l freie Schwefelsäure und 365 g/l Natriumsulfat enthält.

Durch Wasserüberführung vom Anoden- in den Kathodenraum sowie durch Wasserverdampfung in Verbindung mit dem Austreiben von gasförmigem SO₂ verringert sich das Volumen der Flüssigkeit vor allem im Anolyt-Kreislauf. Deshalb fließen nur 3,6 l/h an Flüssigkeit durch die Leitung (23) in die zweite Stufe und durch die Leitung (24) werden 3,15 l/h an Flüssigkeit abgezogen. Die Verweilzeit der Flüssigkeit im Anolyt-Kreislauf der ersten Stufe, zu welchem auch das Reaktions- und Entgasungsgefäß (12) gehört, liegt bei 144 Minuten.

In den Katholyt-Kreislauf werden duch die Leitung (21) 1,6 l/h Wasser zugegeben und man zieht durch die Leitung (20) 2,4 l/h Natronlauge mit einem NaOH-Gehalt von 216 g/l ab. Bezogen auf den geflossenen Elektrolysetrom entspricht das einer elektrischen Überführung von Na-Ionen durch die Kationenaustauschermembranen von 58 %. Für die Aufarbeitung von 1 l Abwasser zu 0,63 l Natriumsulfatlösung werden also 120 Ah benötigt. Die Hauptmenge des gebundenen Schwefeldioxids wird dabei im Gefäß (12) freigesetzt, unterstützt durch die Zufuhr von Strippluft.

### Beispiel 2

Man arbeitet wie im Beispiel 1 und führt die Elektrolytströme wie in Fig. 2 dargestellt. Bei den drei Zellen der ersten Elektrolysestufe verwendet man nunmehr Anoden aus Titanblech, beschichtet mit Iridium-Tantal-Mischoxiden. Die Zelle der zweiten Elektrolysestufe weist eine Graphit-Kathode auf, die Zellenspannung liegt bei 4,7 V. Etwas überraschend wird festgestellt, daß man die gleichen Ergebnisse wie im Beispiel 1 erhält, ausgenommen folgende Abweichungen: Der Elektrolytstrom, der in einer Menge von 3,5 l/h durch die Leitung (24) strömt, hat einen Restgehalt an freier Schwefelsäure von 33 g/l, er ist sulfitfrei und es sind weder oxidierende noch oxidierbare Substanzen nachweisbar, der Gehalt an Natriumsulfat beträgt 372 g/l.

## Patentansprüche

1. Verfahren zur elektrochemischen Behandlung einer sulfithaltigen Lösung, insbesondere eines Abwassers aus einer Gasreinigungsanlage, wobei die Lösung mit Schwefel-Sauerstoff-Säuren oder deren Natriumsalzen verunreinigt ist, dadurch gekennzeichnet, daß man die Lösung als Anolyt durch den Anodenraum einer Elektrolyseanlage mit mindestens einer Zelle leitet, deren Anodenraum durch eine Kationenaustauschermembran vom Kathodenraum getrennt ist, wobei man mindestens einen Teil des aus der Zelle abgezogenen Anolyten mit einem pH-Wert von höchstens 5 im Kreislauf durch ein Reaktions- und Entgasungsgefäß führt und SO₂ gasförmig abzieht und wobei im Kathodenraum eine NaOH-Lösung gebildet wird.

2. Verfahren nach Anspruch 1, dadurch gekennzeichnet, daß bei Stromdichten zwischen 0,5 und 10 kA/m² und Temperaturen im Bereich von 20 bis 100°C elektrolysiert wird.

3. Verfahren nach Anspruch 1 oder 2, dadurch gekennzeichnet, daß im Reaktions- und Entgasungsgefäß eine Verweilzeit von 15 bis 300 Minuten eingehalten wird.

4. Verfahren nach Anspruch 1 bis 3, dadurch gekennzeichnet, daß man in das Reaktions- und Entgasungsgefäß ein gas- oder dampfförmiges Strippmedium einleitet.

5. Verfahren nach Anspruch 1 oder einem der folgenden, dadurch gekennzeichnet, daß die im Kathoden- und/oder Anodenraum entwickelten Gase zum Antrieb des Katholyt- und/oder Anolyt-Kreislaufs genutzt werden.

6. Verfahren nach Anspruch 1 oder einem der folgenden, dadurch gekennzeichnet, daß in einer mindestens zweistufigen Elektrolyseanordnung gearbeitet wird, wobei die erste Stufe einen Anolyt-Kreislauf zwischen dem Anodenraum und dem Reaktions- und Entgasungsgefäß aufweist und ein Teilstrom des aus dem Gefäß abgezogenen Anolyten durch die zweite Stufe oder eine nachfolgende Stufe der Elektrolyseanordnung geführt wird.

7. Verfahren nach Anspruch 6, dadurch gekennzeichnet, daß in einer mindestens zweistufigen Elektrolyseanordnung Anolyt aus der zweiten Stufe in den Kathodenraum einer Zelle der zweiten Stufe geleitet wird.

8. Verfahren nach Anspruch 6 oder 7, dadurch gekennzeichnet, daß man bei mindestens zweistufiger Elektrolyseanordnung die erste Stufe mit 70 bis 95 % der gesamten Stromkapazität der Elektrolyseanordnung betreibt.

9. Verfahren nach Anspruch 6, 7 oder 8, dadurch gekennzeichnet, daß bei einer mindestens zweistufigen Elektrolyseanordnung die Stufen innerhalb einer bipolaren Mehrfachzelle angeordnet sind.
